(19) Europäisches Patentamt
European Patent Office
Office européen des brevets

(11) EP 0 892 256 B1

(12) **EUROPÄISCHE PATENTSCHRIFT**

(45) Veröffentlichungstag und Bekanntmachung des Hinweises auf die Patenterteilung:
**19.05.2004 Patentblatt 2004/21**

(51) Int Cl.[7]: **G01G 19/08**

(21) Anmeldenummer: **98111820.1**

(22) Anmeldetag: **26.06.1998**

(54) **Einrichtung zur Gewichtsbestimmung von angelenkten Lasten**

Apparatus for detecting the weight of hinged loads

Dispositif pour déterminer le poids de charges articulées

(84) Benannte Vertragsstaaten:
**AT DE FR GB IT SE**

(30) Priorität: **19.07.1997 DE 19731089**

(43) Veröffentlichungstag der Anmeldung:
**20.01.1999 Patentblatt 1999/03**

(73) Patentinhaber: **ROBERT BOSCH GMBH**
**70442 Stuttgart (DE)**

(72) Erfinder: **Keuper, Gerhard**
**71229 Leonberg (DE)**

(74) Vertreter: **Thürer, Andreas et al**
**c/o Bosch Rexroth AG**
**97813 Lohr am Main (DE)**

(56) Entgegenhaltungen:
**EP-A- 0 496 166**
**DE-A- 3 629 244**
**DE-A- 3 820 757**
**DE-A- 4 328 145**
**FR-A- 2 499 053**
**US-A- 5 070 953**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 892 256 B1

Printed by Jouve, 75001 PARIS (FR)

## Beschreibung

### Stand der Technik

Die Erfindung geht aus von einer Einrichtung zur Gewichtsbestimmung von Lasten, die mit Hilfe eines von einem hydraulischen Zylinder betätigbaren Gestänges an einem Arbeitsfahrzeug höhenverstellbar angelenkt sind, nach der im Oberbegriff des Anspruchs 1 näher angegebenen Gattung.

Es ist schon eine Einrichtung zur Gewichtsbestimmung von Lasten aus der,DE 38 20 757 bekannt, bei der an einem Traktor mit elektrohydraulischer Hubwerks-Regeleinrichtung das Gewicht eines über das 3-Punkt-Gestänge höhenverstellbar angelenkten Gerätes ermittelt wird. Als lastabhängiger Sensor für die Gewichtsbestimmung wird dabei ein Drucksensor verwendet, welcher den hydraulischen Druck im Zylinder abgreift, mit dem das Hubwerk hydraulisch betätigt wird. Bei einer derartigen Einrichtung ist die Schwerpunktlage des über das Hubwerk am Traktor angebauten Gerätes, das zum Beispiel ein Düngerstreuer mit Streugut sein kann, in der Regel nicht bekannt. Aufgrund des Momentes, das die Gewichtskraft mit dem Schwerpunktabstand auf das Hubwerk ausübt, wird in einer allgemeinen Lage des Traktor-Hubwerks zur Abstützung durch den hydraulischen Zylinder eine Kraft benötigt, die sowohl die Kraft- als auch die Momentenkomponente des Gewichtes abstützen muß. Aus der Messung des Druckes im Hubwerks-Zylinder sind jedoch wegen der unbekannten Schwerpunktslage die Anteile im Hinblick auf die Gewichtsermittlung nicht voneinander trennbar. Ausschließlich bei einer Parallel-Lage von Oberlenker und Unterlenker im Gestänge wird dieses Moment allein von den Lenkern aufgenommen. Aus diesem Grund wird bei der Gewichtsbestimmung von einer Messung bei paralleler Lage der Lenker im Hubwerk ausgegangen. Bei Messung des Druckes in dieser Lage wird in einem Kalibrierlauf die Verstärkung zwischen einem bekannten Leergewicht eines angebauten Gerätes und dem hydraulischen Druck im Zylinder bestimmt. Mit Hilfe dieses Wertes können dann zugeladene Gewichte ermittelt werden, wobei jedoch die Meßlage weiterhin die Parallelstellung der Lenker bleiben muß. Es ist nun von Nachteil, daß nur in wenigen Fällen überhaupt eine parallele Lage von Ober- und Unterlenker bei einer Paarung serienmäßiger Geräte und Hubwerke existiert, so daß im allgemeinen keine optimalen Voraussetzungen für das Wiegen am Traktor vorliegen.

Ferner ist aus der EP 0 496 869 B1 eine gattungsgemäße Einrichtung zur Gewichtsbestimmung von Lasten bekannt, bei der an einem Radlader über ein hydraulisch betätigbares Gestänge frontseitig eine Schaufel angelenkt ist, deren Nutzlast bestimmt werden soll. Dabei wird zur Gewichtsbestimmung ein erstes Signal von einem am hydraulischen Zylinder angeordneten Drucksensor sowie ein zweites Signal von einem die Lage bzw. Geometrie des Gestänges erfassenden Sensor verwendet, aus denen zusätzlich ein Korrekturwert für die Längsneigung des Fahrzeugs ermittelt wird und zur Gewichtsbestimmung eingesetzt wird. Von Nachteil ist, daß hier die Längsneigung des Fahrzeugs nur in indirekter Form zur Gewichtsbestimmung herangezogen wird, so daß deren Genauigkeit keine hohen Anforderungen erfüllt. Zudem müssen bei dieser Einrichtung zur Gewichtsbestimmung Kalibrierläufe mit leerer Schaufel und mit einer vorbekannten Zuladung durchgeführt werden, was den Aufwand erhöht. Eine genaue Berechnung der Nutzlast ist hier nicht möglich, da hier Näherungsverfahren angewandt werden.

### Vorteile der Erfindung

Die erfindungsgemäße Einrichtung zur Gewichtsbestimmung von Lasten mit den kennzeichnenden Merkmalen des Hauptanspruchs hat demgegenüber den Vorteil, daß sie ein Wiegen bei beliebiger Gestängelage erlaubt. Damit wird ein Meß- und Auswertekonzept für prinzipiell beliebige Paarungen von Hubwerk- und Anbaugerät mit allgemeiner Kinematik vorgeschlagen, das eine Gewichtsbestimmung von Lasten in beliebiger Lage ermöglicht. Es sind keine Einschränkungen bezüglich der Anbaugeometrie des angelenkten Gerätes erforderlich. Selbst bei zeitlich veränderlichen Gewichten ist innerhalb gewisser Grenzen der Gewichtsänderung und damit eventuell verbundener Änderung der resultierenden Schwerpunktslage somit eine kontinuierliche Messung bei beliebiger Hubwerkslage durchführbar. Der Aufwand an Sensorik wird hierbei gering gehalten.

Durch die in den abhängigen Ansprüchen aufgeführten Maßnahmen sind vorteilhafte Weiterbildungen und Verbesserungen der im Hauptanspruch angegebenen Einrichtung möglich. Vorteilhaft ist eine Ausbildung nach Anspruch 2, wodurch sich mit geringem Aufwand die Genauigkeit der Gewichtsermittlung erhöhen läßt. Günstig ist es ferner, wenn gemäß Anspruch 3 die Längsneigung des Fahrzeugs bei der Gewichtsbestimmung berücksichtigt wird. Ferner wird gemäß Anspruch 9 ein Verfahren angegeben, mit dem eine Gewichtsbestimmung von angelenkten Lasten bei beliebiger Hubwerkslage möglich ist. Gemäß den abhängigen Ansprüchen 10 bis 18 werden besonders vorteilhafte Ausgestaltungen dieses Verfahrens angegeben.

### Zeichnung

Ein Ausführungsbeispiel der Erfindung ist in der Zeichnung dargestellt und in der nachfolgenden Beschreibung näher erläutert. Es zeigen

Figur 1 in vereinfachter Darstellung eine erfindungsgemäße Einrichtung zur Gewichtsbestimmung von angehängten Lasten,
Figur 2 als Teil der Einrichtung die Kinematik des Gestänges mit der angehängten Last und den auftretenden Kräften in vereinfachter Darstellung, Figur 3 ein Flußdiagramm für die Gewichtsbestimmung der Last in vereinfachter Darstellung,
Figur 4 den Einfluß der Reibung auf die Kraft des Hubzylinders in Abhängigkeit vom Hubwerkslagewinkel und
Figur 5 ein Flußdiagramm zur Ermittlung des Reibungseinflusses bei der Gewichtsbestimmung in vereinfachter Weise.

Beschreibung des Ausführungsbeispiels

Die Figur 1 zeigt in vereinfachter Form eine Einrichtung 10 zur Gewichtsbestimmung von angehängten Lasten 11, die hier in an sich bekannter Weise über ein elektrohydraulisch betätigbares 3-Punkt-Regelgestänge 12 höhenverstellbar an der Heckseite eines Arbeitsfahrzeuges, das hier als Traktor 13 ausgebildet ist, angelenkt sind. Das Gestänge 12 ist somit ein Teil einer elektrohydraulischen Hubwerks-Regeleinrichtung 14, in welche die Einrichtung 10 zur Gewichtsbestimmung im wesentlichen integriert ist.

Die Last 11, deren Gewicht gemessen werden soll, liegt auf einem Gerät 15 auf, das über einen Oberlenker 16 sowie zwei Unterlenker 17, von denen nur einer gezeichnet ist, gehäusefest am Traktor 13 angelenkt ist. Zur Höhenverstellung des Geräts 15 greift am Unterlenker 17 eine Hubstange 18 an, die über einen Hubarm 19 von einem hydraulischen Hubzylinder 21 betätigbar ist. Der Hubzylinder 21 ist in an sich bekannter Weise aus einem hydraulischen Kreis 22 über ein elektrohydraulisches Regelventil 23 steuerbar.

Das Regelventil 23 wird von einem elektronischen Steuergerät 26 angesteuert, das zur Durchführung üblicher Hubwerksregelungen mit Signalen geeigneter Sensoren versorgt wird. Für die Funktion der Einrichtung 10 zur Gewichtsbestimmung von Lasten wird dieses Steuergerät 26, das geeignete Mikroprozessoren aufweist, mit einem ersten Signal von einem Drucksensor 27 versorgt, welcher den hydraulischen Druck im Hubzylinder 21 abgreift. Ferner wird das elektronische Steuergerät 26 mit einem zweiten Signal von einem Winkelsensor 28 versorgt, der am traktorseitigen Anlenkpunkt des Unterlenkers 17 angeordnet ist und einen Hubwerkslagewinkel mißt, der für die Lage des Gestänges 12 relativ zum Traktor 13 und damit für dessen Kinematik charakteristische Signale liefert. Das Steuergerät 26 erhält ferner ein drittes Signal von einem Neigungssensor 29, der am Traktor 13 befestigt ist und damit den Längs-Neigungswinkel des Traktors 13 zur Horizontalen ermittelt. Ferner steht das Steuergerät 26 mit einem Bedienteil 31, einem Anzeigegerät 32 sowie einem Datenspeicher 33 in Wirkverbindung. Das elektronische Steuergerät 26 ist somit einerseits der elektrohydraulischen Hubwerks-Regeleinrichtung 14 und andererseits der Einrichtung 10 zur Gewichtsbestimmung zugeordnet, so daß es mit geeigneten Mitteln zur Datenverarbeitung und zur Weitergabe der Daten ausgerüstet ist.

Die Figur 2 zeigt als Teil der Einrichtung 10 die Kinematik des Gestänges 12 mit dem angelenkten Gerät 15 in vereinfachter Darstellung. Die allgemeine Kinematik entspricht bei Projektion des 3-Punkt-Gestänges 12 in die zur Längsachse des Traktors 13 und zu dessen Hochachse gegebenen Ebene einem Gelenkviereck. Zur Beschreibung der Zustände und Kräfte in diesem Gelenkviereck werden dabei folgende Begriffe verwendet.

| | |
|---|---|
| $x_0$, $y_0$ | Weltkoordinaten-System |
| $x_{0T}$, $y_{0T}$ | Bezugskoordinaten-System-Traktor |
| $x_{0G}$, $y_{0G}$ | Bezugskoordinaten-System-Gerät |
| $\varphi$ | gemessener Hubwerks-Gestänge-Lagewinkel relativ zu Traktor |
| $\varphi_{TG}$ | Winkel zwischen Koordinatensystemen von Traktor und Gerät |
| $\psi$ | gemessener Längs-Neigungswinkel von Traktor zur Horizontalen |
| $\alpha_{SP}$ | Winkel zwischen Schwerpunktsradius $r_{SP}$ bezüglich B und Koordinate $x_{0G}$ |
| A, D | traktorseitige Gelenkpunkte von Unter- bzw. Oberlenker |
| B, C | geräteseitige Gelenkpunkte von Unter- bzw. Oberlenker |
| $l_u$ | Länge des Unterlenkers zwischen A, B |
| $l_o$ | Länge des Oberlenkers zwischen D, C |
| $l_1$ | Abstand zwischen traktorseitigen Gelenkpunkten A, D |
| $l_2$ | Abstand zwischen geräteseitigen Gelenkpunkten B, C |
| F | Kraft des Hubzylinders abhängig von gemessenem Druck p im Hubzylinder |
| S | Kraft im Oberlenker |
| G | resultierende Gewichtskraft des Geräts incl. Zuladung |
| $G_0$ | Leergewicht des Geräts |

(fortgesetzt)

| | |
|---|---|
| $r_{SA}$ | Radius der Oberlenkerkraft S bezüglich Gelenkpunkt A |
| $r_{SB}$ | Radius der Oberlenkerkraft S bezüglich Gelenkpunkt B |
| $r_{GA}$ | Radius der Gewichtskraft G bezüglich |

| | |
|---|---|
| | Gelenkpunkt A |
| $r_{GB}$ | Radius der Gewichtskraft G bezüglich Gelenkpunkt B |
| $r_{SP}$ | Radius des Schwerpunkts bezüglich Gelenkpunkt B |
| $r_F$ | Radius der Hubkraft F bezüglich Gelenkpunkt A |
| $M_F$ | Moment des Hubzylinders bezüglich Gelenkpunkt A |
| $\hat{G}, \hat{r}_{SP}, \hat{\alpha}_{SP}$ ... | Schätzwerte der betreffenden Größen |
| e | Schätzfehler |
| $\underline{M}_F$, $\underline{\psi}$, $\underline{\varphi}$ | Vektorielle Darstellung der betreffenden Größen |
| n | Anzahl der Meßlagen/Meßwertsätze |
| $a_1$, $a_2$, $a_3$, $a'_1$ | Substitutionswerte |
| $\bar{M}$, $\bar{F}$ | Mittelwerte der betreffenden Größen |
| i | Laufvariable |

Die Gliedlängen $l_u$, $l_o$, $l_1$, $l_2$ des Gelenkvierecks können als bekannt angenommen werden bzw. sind ohne nennenswerten Aufwand zu bestimmen. Durch die Verwendung einer elektrohydraulischen Hubwerks-Regeleinrichtung 14 wird ferner durch den Winkelsensor 28 der Hubwerks-Gestänge-Lagewinkel $\varphi$ am Unterlenker 17 gemessen. Damit kann zu jedem Zeitpunkt die Lage der Gelenkpunkte A, B, C, D, des Viergelenks errechnet oder aus einer einmal erstellten Tabelle ermittelt werden. Desgleichen ist die Anlenkung des Hubzylinders 21 über die Hubstange 18 an das Gelenkviereck des Gestänges 12 mit Gerät 15 durch die Konstruktion des Traktors 13 festgelegt und damit bekannt. Daher können ebenfalls zu jedem Zeitpunkt die Orientierung und die Lage der Kraft F des Hubzylinders 21 am Gestänge 12 angegeben werden. Mit Kenntnis der Geometrie und der Messung des hydraulischen Drucks im Hubzylinder 21 kann dann auch das durch den Hubzylinder ausgeübte Moment auf einen beliebigen Bezugspunkt, zum Beispiel den traktorseitigen Gelenkpunkt A des Unterlenkers 17 bestimmt werden.

Bei einer statischen Betrachtung der Momentensumme der am Hubwerk angreifenden Kräfte bzw. Momente lassen sich bei beliebigen Hubwerkspositionen folgende Ansätze aufstellen. So ergibt sich für das Moment des Hubzylinders 21 um den Gelenkpunkt A folgende Gleichung:

$$\text{(I)} \qquad M_F = r_F \cdot F$$

Ferner kann aus der Betrachtung aller Momente um den Gelenkpunkt A folgende Gleichung aufgestellt werden:

$$\text{(II)} \qquad M_F + S \cdot r_{SA} - G \cdot r_{GA} = 0$$

Ferner ergibt sich aus einer Betrachtung der Momente um den Gelenkpunkt G die Gleichung:

$$\text{(III)} \qquad S \cdot r_{SB} - G \cdot r_{GB} = 0$$

Aus den Gleichungen II und III läßt sich die Gleichung IV ableiten:

$$\text{(IV)} \qquad M_F + G\left(\frac{r_{GB}}{r_{SB}} \cdot r_{SA} - r_{GA}\right) = 0$$

Durch die Zusammenhänge in der Kinematik des Gestänges 12 mit dem angebauten Gerät 15 gelten ferner die Gleichungen:

$$\text{(V)} \qquad r_{GB} = r_{SP} \cdot \cos(\alpha_{SP} + \psi + \varphi_{TG})$$

$$\text{(VI)} \qquad r_{GA} = r_{GB} + l_u \cdot (\cos(\varphi + \psi))$$

Aus der Gleichung IV läßt sich durch Einsatz der Größen nach den Gleichungen (V) und (VI) folgende Gleichung aufstellen:

$$\text{(VII)} \quad M_F + G\left(\frac{r_{SP}\cos(\alpha_{SP} + \psi + \varphi_{TG}) \cdot r_{SA}}{r_{SB}} - r_{SP}\cos(\alpha_{SP} + \psi + \varphi_{TG}) + l_u(\cos(\psi + \varphi))\right) = 0$$

Aus der Gleichung VII läßt sich durch Umformung folgende Gleichung herleiten:

$$\text{(VIII)} \qquad M_F + G \cdot \left[ r_{SP} \cdot \cos(\alpha_{SP} + \psi + \varphi_{TG}) \left(\frac{r_{SA}}{r_{SB}} - 1\right) + l_u \cdot (\cos(\varphi + \psi) \right] = 0$$

Aus dieser Gleichung (VIII) zeigt sich, daß bei statischer Betrachtung der Momentensumme der am Hubwerk angreifenden Kräfte bzw. Momente sich bei beliebiger Hubwerkslage und bei allgemeinen Bedingungen eines am Gestänge 12 angebauten Geräts 15 sowie unter Berücksichtigung einer sensierten Neigung des Traktors 13 im Gelände mit Hilfe des Neigungssensors 29 sich eine Gleichung ergibt, die lediglich drei unbekannte skalare Größen aufweist. Diese drei unbekannten Größen G, $r_{SP}$, $\alpha_{SP}$ lassen sich der zu bestimmenden Gewichtskraft und deren Relativlage zu einem bestimmten Punkt des Gestänges 12 zuordnen. Dabei ist es vorteilhaft, wenn als Bezugslage der geräteseitige Anlenkpunkt B des Geräts 15 am Unterlenker 17 gewählt wird.

Für jede beliebige Lage des Gestänges 12 mit angelenktem Gerät 15 inklusive Gerät 12 kann eine derartige Beziehung nach Gleichung VIII aus dem Momenten- bzw. Kräfte-Gleichgewicht nach Messung der drei Signale aus dem Drucksensor 27, dem Winkelsensor 28 und dem Neigungssensor 29 angegeben werden. Durch Messungen in mindestens drei voneinander verschiedenen Meßlagen ergibt sich idealer Weise ein eindeutig bestimmtes Gleichungssystem für die drei unbekannten Größen. Dieses Gleichungssystem kann daher entweder mathematisch nach den unbekannten Größen aufgelöst werden oder aber die Bestimmung der Unbekannten erfolgt numerisch. Aus dem gemessenen Druck des Drucksensors 27 läßt sich mit Hilfe der Kolbengröße im Hubzylinder 21 und dem durch die Kinematik des Gestänges festgelegten Radius $r_F$ das Moment $M_F$ der Hubkraft ermitteln, während der Winkelsensor 28 den Gestänge-Lagewinkel $\varphi$ und der Neigungssensor 29 den Neigungswinkel $\psi$ mißt, können die Größen $r_{SA}$ sowie $r_{SB}$ sowie der Winkel $\varphi_{TG}$ aus einer zuvor errechneten Tabelle als vorbekannt entnommen werden.

In vorteilhafter Weise erfolgt die Erfassung der Meßwertsätze in den drei verschiedenen Lagen bei quasi stationärer Betätigung des Gestänges 12 in aufeinanderfolgenden Aufwärts- und Abwärtsbewegungen. Dabei ist es günstig, wenn der gesamte Hubbereich durchlaufen wird, um möglichst Meßwertsätze bei geometrisch deutlich unterschiedlichen Lagen zu gewinnen, so daß keine linearen Abhängigkeiten von Meßwertsätzen untereinander entstehen.

Wegen in der Praxis stets vorhandenen Meßfehlern aufgrund zum Beispiel nicht idealer Kennlinien der Sensoren oder Quantisierung bei Wandlung der analogen Meßgrößen in digitale Werte ist es eventuell vorteilhaft, für die Bestimmung der Unbekannten mehr als drei Meßlagen heranzuziehen. Das Gleichungssystem wird dadurch überbestimmt. Hier können nun Verfahren der Parameterschätztheorie angewendet werden. Dazu werden formal in das überbestimmte Gleichungssystem anstelle der unbekannten, wahren Größen G, $r_{SP}$, $\alpha_{SP}$ deren Schätzwerte $\hat{G}$, $\hat{r}_{SP}$, $\hat{\alpha}_{SP}$ eingesetzt und je Gleichungssatz ein Schätzfehler e eingefügt. Durch Ableitung aus der Gleichung (VIII) ergibt sich dadurch die Gleichung (IX):

$$(IX) \quad \underline{M}_F + \hat{G}\,[\hat{r}_{SP} \cdot \cos(\hat{\alpha}_{SP} + \underline{\psi} + \underline{\varphi}_{TG}) \left(\frac{\underline{r}_{SA}}{\underline{r}_{SB}} - 1\right) + l_u \cdot \cos(\underline{\varphi} + \underline{\psi})] + \underline{e} = \underline{0}$$

Mit dieser Gleichung (IX) können bei n Meßwertsätzen die vektoriellen Werte der bekannten Größen $\underline{M}_F$, $\underline{\psi}$, $\underline{r}_{SA}$, $\underline{r}_{SB}$, $\underline{\varphi}_{TG}$, $\underline{\varphi}$, $\underline{e}$ verarbeitet werden, um dadurch von den unbekannten drei Größen deren Schätzwerte G,$r_{SP}$,$\alpha_{SP}$ zu erhalten. Dabei können die Schätzgrößen der drei Unbekannten durch Minimierung der Schätzfehler, zum Beispiel durch Minimierung der Fehlerquadratsumme nach der Gleichung X:

$$(X) \qquad (\underline{e})^2 \rightarrow \text{Min}$$

ermittelt werden, wobei auch diese Methode als "least squares Schätzung" bezeichnet wird. Aufgrund des größeren Meßwertesatzes verringert sich der Einfluß zufälliger Fehler der obengenannten Art.

Wenn nach einer Auswertung entsprechend den vorgenannten Verfahrensweisen die unbekannten Größen des Gewichts G des Geräts 15 einschließlich Last 11 und dessen Schwerpunktslage $r_{SP}$, $\alpha_{SP}$ für einen Augangszustand bekannt sind, können Veränderungen des Gewichts G, zum Beispiel nach Ausbringen von Düngemittel, näherungsweise mit Hilfe der Ausgangs-Momentenbeziehung für eine beliebige Lage des Gestänges 12 bestimmt werden. Dazu kann in der Praxis angenommen werden, daß die Schwerpunktslage sich - zumindest innerhalb zu definierender Grenzen des Gesamtgewichts von Gerät 15 und Last 11 - nur unbedeutend ändert. Mit diesem Ansatz wird eine - zumindest abschnittsweise - kontinuierliche Bestimmung des Gewichts bei beliebiger Lage des Hubwerks 14 möglich. Erst bei Überschreiten der vordefinierten Vertrauensgrenzen ist eine Wiederholung der Schätzung von Gewicht und Schwerpunktslage erforderlich.

Für ein Arbeiten mit den Gleichungen nach (VIII) und (IX) ist eine Umformung der Gleichungsansätze vorteilhaft, da diese genannten Gleichungen nichtlineare Verknüpfungen der unbekannten Größen G, $r_{SP}$ und $\alpha_{SP}$ enthalten. Für eine direkte Berechnung bzw. auch die Anwendung linearer Parameterschätzverfahren eignen sich bevorzugt Gleichungen, in denen die unbekannten Größen linear verknüpft vorkommen. Um dies zu erreichen ist eine Umformung in folgender Weise vorteilhaft. Dazu wird eine Anwendung des Additionstheorems für den Cosinus-Satz nach der Gleichung:

$$(XI) \qquad \cos(\alpha + \beta) = \cos\alpha \cdot \cos\beta - \sin\alpha \cdot \sin\beta$$

vorgenommen. Auf diese Weise läßt sich aus der Gleichung (VIII) der Ausdruck für den Cosinus entnehmen und wie folgt umformen nach der Gleichung:

$$(XII) \qquad \cos(\alpha_{SP} + \psi + \varphi_{TG}) = \cos\alpha_{SP} \cdot \cos(\psi + \varphi_{TG}) - \sin\alpha_{SP} \cdot \sin(\psi + \varphi_{TG})$$

Wird nun ausgehend von der Gleichung (VIII) diese durch die Größe G dividiert, zudem das Additionstheorem nach Gleichung (XII) angewendet und darüberhinaus eine Substitution durchgeführt, bei der man in einem Zwischenschritt folgende Termen näher definiert:

$1{:}G = a_1$
$r_{SP} \cdot \cos\alpha_{SP} = a_2$ - $r_{SP} \cdot \sin\alpha_{SP} = a_3$

so läßt sich eine Gleichung ableiten, die in den unbekannten Größen $a_1$ bis $a_3$ linear ist und wie folgt lautet:

$$(XIII)\quad a_1 M_F + a_2 \cdot \cos(\psi + \varphi_{TG}) \cdot \left(\frac{r_{SA}}{r_{SB}} - 1\right) + a_3 \cdot \sin(\psi + \varphi_{TG}) \left(\frac{r_{SA}}{r_{SB}} - 1\right) + l_u \cdot \cos(\psi + \varphi) = 0$$

Diese Gleichung (XIII) erschließt sich leicht der analytisehen Berechnung bzw. eignet sich für die lineare Parameterschätzung. somit ergibt sich eine Bestimmungsgleichung (XIII) mit linear verknüpften, unbekannten Größen $a_1$ bis $a_3$. Diese Zwischengrößen sind bei Verwendung von drei Meßgleichungen direkt auflösbar nach $a_1$ bis $a_3$. Aus diesen können dann die substituierten Größen direkt ausgerechnet werden.

Für die direkte Parameterschätzung gilt dabei entsprechendes. Auch hier können die Schätzwerte der Zwischengrößen mit Hilfe der linearen Parameterschätztheorie prinzipiell auf der Basis beliebig vieler Meßwertsätze, also wenn $n > 3$ ist, direkt berechnet werden.

In Figur 3 ist nun anhand eines Flußdiagramms in stark vereinfachter Darstellung die Bestimmung des Gewichts G aufgezeichnet. Dazu wird in einem ersten Schritt 40 das Hubwerk 14 auf- und abbewegt, wobei dies mit weitgehend stationärer Geschwindigkeit erfolgt. Dabei werden im Schritt 41 mit zum Beispiel festem oder auch beliebigem zeitlichen Zyklus ständig Meßwertsätze der Größen Druck im Hubzylinder 21 bzw. dessen Kraft F, und zwar für die Bewegungen auf und ab, die Lage des Hubwerks $\varphi$ anhand des Winkelsensors 28 sowie die Längs-Neigung $\psi$ mit Hilfe des Neigungssensors 29 erfaßt und gespeichert. Dabei kann dieser Schritt 41 gemäß Schritt 42 mit einer begrenzten Anzahl n durchgeführt werden oder für ein rekursives Verfahren nach Schritt 43 in unbegrenzter Weise vorgenommen werden. In dem Schritt 44 werden anschließend die Reibanteile aus der Hubkraft eliminiert. Auf den hierbei erforderlichen Zwischenschritt 45 wird dabei später noch eingegangen. In dem nachfolgenden Schritt 46 werden zu den unbekannten Koeffizienten $a_1$ bis $a_3$ die zugehörigen Terme $T_1$ bis $T_4$ ermittelt, wobei auf die Gleichung (XIII) Bezug genommen wird. Bei dieser Berechnung der Terme $T_1$ bis $T_4$ können aus einem Schritt 47 die angegebenen Größen entnommen werden, die bei einem Schritt der Initialisierung ermittelt werden. Bei dieser Initialisierung kann eine Interpolation aus einer Tabelle oder eine Berechnung aus einem Approximations-Polynom oder auch eine direkte Berechnung vorgenommen werden. Mit den im Schritt 46 ermittelten Terme kann dann im Schritt 48 nach dem formal entstehenden Gleichungssystem gearbeitet werden, das an sich aus der Gleichung (XIII) herleitbar ist. Mit dem Schritt 49 wird schließlich eine direkte algebraische Berechnung durchgeführt, wobei die Meßwertsätze entsprechend dreier unterschiedlicherMeßlagen auf drei Lösungsgleichungen für drei Unbekannte angewandt werden. Der Schätzfehler e wird dabei als Null angesetzt. Bei dieser direkten Berechnung nach Schritt 49 ergeben sich Schätzwerte $\hat{a}1,\hat{a}2,\hat{a}3$ welche den Substitutionswerten $a_1$, $a_2$, $a_3$ entsprechen. In dem Schritt 51 lassen sich diese Substitutionswerte wieder invertieren, woraus die unbekannten Größen G, $\alpha_{SP}$, $r_{SP}$ hervorgehen, welche anschließend im Schritt 52 zur Anzeige gebracht werden.

Für den Fall, daß die Anzahl der Meßlagen und damit der Meßwertsätze größer als 3 gewählt wird, wird nach Schritt 53 verfahren, wobei eine direkte Parameterschätzung in einem Zug vorgenommen wird. Wie bereits erwähnt kann dabei nach der Methode der kleinsten Fehlerquadrate verfahren werden, wobei die Summe aus dem Quadrat des Schätzfehlers e zu einem Minimum geführt wird. Auf diese Weise werden mit Schritt 53 Schätzwerte der drei unbekannten $\hat{a}1,\hat{a}2,\hat{a}3$ erhalten. Auch beim Parameterschätzverfahren werden im anschließenden Schritt 54 nach dem Einsetzen dieser Größen in die Substitutionsgleichungen die Schätzwerte der Zielgrößen Gewicht und Schwerpunktslage bestimmt und anschließend im Schritt 52 zur Anzeige gebracht.

Weiterhin eröffnet sich durch die Umformung und die daraus resultierende Gewinnung linearer Gleichungsbeziehungen die Möglichkeit, rekursive Parameterschätzverfahren anzuwenden. Für diesen Fall werden die in Schritt 46 abgeleiteten Terme $T_1$ bis $T_4$ in dem Schritt 55 für den Rekursionsalgorithmus aufbereitet. In dem nachfolgenden Schritt 56 wird eine rekursive Parameterschätzung vorgenommen, welcher immer neue, verbesserte bzw. aktualisierte Schätzwerte der Größen $a_1$ bis $a_3$ ergibt. Aus diesen können dann nach Durchlaufen der Substitutionsgleichungen im Schritt 54 die Zielwerte ermittelt und im Schritt 52 zur Anzeige gebracht werden. Für den Schritt 56, bei dem ebenfalls die Anzahl der Meßlagen n größer als 3 ist, läßt sich die erwähnte Methode der kleinsten Fehlerquadrate für die Ermittlung der drei Unbekannten anwenden. Anstelle des Schrittes 56 können auch die Termen von Schritt 55 gemäß Schritt 57 erarbeitet werden, indem eine gewichtete, rekursive Parameterschätzung durchgeführt wird. Bei dieser Vorgehensweise werden stets aktuelle Werte stärker gewichtet als zurückliegende Werte, wodurch aktuelle Schätzwerte für die drei Unbekannten $\hat{a}1,\hat{a}2,\hat{a}3$ geliefert werden. Dies erlaubt eine adaptive Schätzung zeitvarianter Größen. Damit erschließt sich die Möglichkeit, ein veränderliches Gewicht G fortlaufend zu schätzen, also während der Fahrt und bei veränderlichem Gewicht. Damit läßt sich die Schätzung stetig oder unstetig sich ändernder Parameter ermöglichen.

Auch die Ausgangsgrößen des Schrittes 57 ergeben nach Behandlung mit den Substitutionsgleichungen im Schritt 54 schließlich eine Anzeige der Zielgrößen im Schritt 52.

In dem Schritt 47 werden zur Initialisierung des Rechenverfahrens mehrere Größen bereitgestellt, die sich aus bekannten konstruktionsbedingten bzw. durch die Montage des Geräts 15 resultierenden geometrischen Längen ergeben, nämlich den Größen $l_1$, $l_2$, $l_u$, $l_o$, $r_F$ in Abhängigkeit von $\varphi$ sich ergeben bzw. ableiten lassen. Dazu werden in einem Winkelbereich $\varphi_{min} \leq \varphi_i \leq \varphi_{max}$ folgende Werte in einer Tabelle zusammengeführt, nämlich $\varphi_i$, $r_{SA}$ in Abhängigkeit von $\varphi_i$, $r_{SB}$ $(\varphi_i)$, $\varphi_{TG}(\varphi_i)$, $r_F(\varphi_i)$. In der Regel sind dabei am Traktor 13 werksseitig fest eingestellt die Größen $l_u$, $r_F(\varphi)$. Die Längen $l_1$, $l_2$, $l_o$ können ausgemessen werden. Um für die Berechnung oder Schätzung der Gewichtskraft G und der Schwerpunktslage $r_{SP}$, $\alpha_{SP}$ des Geräts 15 die oben genannten Größen bei beliebigen Winkelstellungen $\varphi$ bereitzustellen, kann es vorteilhaft sein, diese Werte zum Beispiel durch Interpolation oder nach abschnittsweiser Approximation von Polynomen zu berechnen.

Um in dem Schritt 44 die Reibanteile aus der Zylinderkraft F eliminieren zu können, ist zuvor in dem Schritt 45 eine Kalibrierung der Kraftmessung notwendig, welche die Reibkraftanteile des Hubzylinders 21 ermittelt und berücksichtigt. Reale Hubzylinder haben in der Regel eine richtungsabhängige Reibung. Die nach außen wirkende Hubzylinderkraft unterscheidet sich von der eigentlichen Hubkraft im Druckzylinder 21 um gerade diese richtungsabhängige Reibkraft. Zwar ist die Summe der Reibkraftanteile durch Messung der Krafthysterese in einer Aufwärts- und Abwärtsbewegung bestimmbar. Die wahre Größe der Zylinderkraft F ist dagegen nicht von vornherein bekannt.

Um nun die Richtungsabhängigkeit der Reibung im Hubzylinder zu bestimmen und zu berücksichtigen wird in Abwandlung des oben beschriebenen Verfahrens zur Betimmung der unbekannten Größen Gewicht und Schwerpunktslage bei beliebiger Lage des Hubwerks 12 nun bei einer Kalibriermessung die vorbekannte Größe des Leergewichts $G_0$ des Geräts 15 herangezogen. Gemessen wird im Hubzylinder 21 mit Hilfe des Drucksensors 27 der Druck bei Aufwärts- und bei Abwärtsbewegung, $F_{auf}$, $F_{ab}$ bei einer beliebigen Hubwerkslage $\varphi$. Dabei unbekannt sind die Reibkräfte $F_{R,auf}$, $F_{R,ab}$ im Hubzylinder 21 sowie die Lage des Geräteschwerpunkts. Diese Zusammenhänge sind nun in Figur 4 näher dargestellt, in welcher der Verlauf der Hubkraft F in Abhängigkeit vom Lagewinkel $\varphi$ in vereinfachter Weise dargestellt ist. Als weitere unbekannte Größe wird nun vorteilhaft die Abweichung $\Delta F_R$ der wahren Hubwerkskraft F von dem Mittelwert $\bar{F}$ der gemessenen Druckkräfte bei Auf- und Abwärtshub eingeführt. Dadurch lassen sich wieder Gleichungen mit drei Unbekannten erstellen, in diesem Falle aber der Schwerpunktslage und des vorgenannten Unterschiedes zwischen betragsmäßiger Reibkraft bei Aufwärts- und Abwärtsbewegung.

Die Figur 5 zeigt in vereinfachter Darstellung ein Ablaufschema zur Feststellung der Richtungsabhängigkeit der Reibung, wie dies in Figur 3 vereinfacht im Schritt 45 dargestellt ist. Dabei wird in Figur 5 gemäß Schritt 60 das Hubwerk 12 abwechselnd auf- und abbewegt zum Durchfahren von Hubwerksstellungen $\varphi$, wobei dies mit weitgehend konstanter Geschwindigkeit erfolgt, um dynamische Kraftanteile zu vermeiden. Dabei werden im Schritt 61 die Meßgrößen erfaßt, insbesondere $\varphi$, $\psi$ und F. Die Erfassung der Hubzylinderkräfte F geschieht dabei paarweise bei Aufwärts- und bei Abwärtsbewegungen, mit Hilfe des Drucks im Hubzylinder 21 unter Berücksichtigung von dessen Kolbenfläche und bei beliebigen Hubwerkslagen $\varphi_i$. Abhängig von der Winkellage $\varphi_i$ werden dabei die Zylinderkräfte $F_{gemessen,\,auf}(\varphi i)$; $F_{gemessen,ab}$ $(\varphi i)$ ermittelt und dann im Schritt 62 paarweise abgespeichert. Für jedes $\varphi_i$ wird dabei eine Berechnung durchgeführt nach der Gleichung:

$$\text{(XIV)} \qquad \bar{F}(\varphi_i)=\frac{1}{2}\cdot(F \text{ gemessen, auf } (\varphi_i) + F \text{ gemessen, ab } (\varphi_i))$$

Die paarweise Behandlung von Meßwertsätzen bei jeweils gleicher, ansonsten aber beliebiger Hubwerkslage $\varphi$ bei Aufwärts- und bei Abwärtsbewegung ermöglicht die Zusammenfassung von Größen. Es gilt in vorliegendem Zusammenhang ferner die Gleichung:

$$\text{(XV)} \qquad F = \bar{F} + \Delta F_R$$

Ferner gilt auch der Zusammenhang nach Gleichung:

$$\text{(XVI)} \qquad M_F = \bar{M}_F + \Delta M_{FR}$$

und auch der Zusammenhang nach Gleichung:

$$\text{(XVII)} \qquad \bar{M}_F(\varphi_i) = \bar{F}(\varphi_i)\cdot r_F(\varphi_i)$$

Aus den aufgezeigten Zusammenhängen in Verbindung mit der Gleichung (VIII) läßt sich schließlich ableiten, daß beim Kalibriervorgang eine Beziehung für das Momentengleichgewicht gilt, aus der die Größe $\Delta M_{FR}$ nach der Gleichung:

$$\text{(XVIII)} \quad \Delta M_{FR} = -\left[\overline{M}_F(\varphi_i) + G\left(r_{SP} \cdot \cos(\alpha_{SP} + \psi_i + \varphi_{TG}) \cdot \left(\frac{r_{SA}}{r_{SB}} - 1\right) + l_u \cdot \cos(\varphi_i + \psi_i)\right)\right]$$

berechnet werden kann. Diese Gleichung (XVIII) enthält lediglich drei Unbekannte, nämlich die Größen $\Delta M_{FR}$, $r_{SP}$ sowie $\alpha_{SP}$.

Nach Figur 5 werden nun in dem Schritt 63 in vergleichbarer Weise wie im Schritt 47 mit Hilfe einer Initialisierungstabelle die zur Lösung der Gleichung (XVIII) erforderlichen Werte bereitgestellt.

Ist nun in besonderen Fällen die Schwerpunktslage, nämlich $\alpha_{SP}$, $r_{SP}$ des Gewichtes $G_0$ des leeren Geräts 15 in Relation zum geräteseitigen Koordinatensystem ($x_{OG}$, $y_{OG}$) bekannt, so kann gemäß Schritt 65 eine direkte Berechnung der Größe $\Delta M_{FR}$ nach der Gleichung (XVIII) erfolgen. In dem weiteren Schritt 66 lassen sich dann die Reibungsanteile $F_{R,auf}$ sowie $F_{R,ab}$ sowie deren Quotient $k_R$ errechnen. Mit diesen Größen läßt sich dann im Schritt 44 der Reibanteil aus der Zylinderkraft eliminieren.

Ist die Schwerpunktslage des leeren Geräts 15 nicht bekannt, so werden mindestens drei Meßwertsätze für die Größe $\Delta M_{FR(\varphi i)}$ in unterschiedlichen Winkelstellungen $\varphi_i$ benötigt, um gemäß Schritt 68 und folgende eine Berechnung vorzunehmen. Dazu wird im Schritt 68 in ähnlicher Weise wie bei der Gewichtsermittlung zur Berechnung der unbekannten Größen wieder eine Substitution angewandt, bei der folgendes gilt:

$$a_1' = \frac{\Delta M_F}{G};$$

$$r_{SP} \cdot \cos\alpha_{SP} = a_2;$$

$$-r_{SP} \cdot \sin\alpha_{SP} = a3$$

Nach dieser Substitution läßt sich eine Gleichung

$$\text{(XIX)} \quad a'_1 + a_2 \cdot [\cos(\psi_i + \varphi_{TG})] \cdot \left(\frac{r_{SA}}{r_{SB}} - 1\right) + a_3[\sin(\psi_i + \varphi_{TG})] \cdot \left(\frac{r_{SA}}{r_{SB}} - 1\right) + l_u \cdot \cos(\varphi_i + \psi_i) + \frac{\overline{M}_F(\varphi_i)}{G} = 0$$

herleiten und gemäß Schritt 69 die Größen $a'_1$, $a_2$, $a_3$ lösen. Im nachfolgenden Schritt 70 wird diese Substitution invertiert, so daß sich daraus die Größen $\Delta M_{Fr}$, $\alpha_{SP}$, $r_{SP}$ errechnen lassen. Mit diesen Größen aus dem Schritt 70 kann anschließend der Schritt 66 durchgeführt werden, um die genauen reibungsabhängigen Größen zu ermitteln.

Liegen im Schritt 67 keine drei sondern mehr als drei Meßwertsätze vor, so kann in vergleichbarer Weise wie bei der Gewichtsermittlung eine Parameterschätzung vorgenommen werden. Dabei wird im Schritt 72 wieder eine Substitution angewandt und es werden die Größen $a'_1$, $a_2$, $a_3$ eingeführt. Im nachfolgenden Schritt 73 wird die eigentliche Parameterschätzung mit mehr als drei Meßwertsätzen durchgeführt, woraus die Schätzwerte der Größen $\hat{a}1,\hat{a}2,\hat{a}3$ ermittelt werden. Im anschließenden Schritt 74 wird die Substitution invertiert, was die Schätzwerte der Grö-

ßen $\Delta\hat{M}_{FR}$, $\hat{\alpha}_{SP}$, $\hat{r}_{SP}$ liefert. Mit diesen Größen kann anschließend wieder in den Schritt 66 gegangen werden, um eine Berechnung der reibungsabhängigen Größen vorzunehmen.

Selbstverständlich sind an den gezeigten Ausführungsformen und Verfahren Änderungen möglich, ohne vom Gedanken der Erfindung abzuweichen. Obwohl die Einrichtung zur Gewichtsbestimmung sich besonders vorteilhaft bei einer elektrohydraulischen Hubwerks-Regeleinrichtung anwenden läßt, ist deren Anwendung auch bei anderen Maschinen möglich, bei denen vergleichbare Verhältnisse vorliegen, wie zum Beispiel einem Radlader, Frontlader, etc.. Für die Berechnung der Lage des Schwerpunkts der Last mit Hilfe der Größen Winkel und Radius ist zwar eine vorteilhafte Vorgehensweise aufgezeigt; die Schwerpunktslage kann jedoch auch ganz allgemein in einem beliebigen Koordinatensystem angegeben und ermittelt werden. Zur Verminderung des technischen Aufwandes kann es gegebenenfalls zweckmäßig sein, unter Verzicht auf Genauigkeit, anstelle der aufgezeigten drei Unbekannten nur mit zwei Unbekannten zu arbeiten, wobei eine Komponente der Schwerpunktslage ($\alpha_{SP}$, $r_{SP}$) als bekannt angesetzt und mit einem festen, unveränderlichen Wert belegt wird. Weiterhin ist eine Verminderung des technischen Aufwandes möglich, wenn unter Verzicht auf Genauigkeit auf den Neigungssensor verzichtet wird.

## Patentansprüche

1. Einrichtung zur Gewichtsbestimmung von Lasten, bei der die Lasten mit Hilfe eines von einem hydraulischen Zylinder betätigbaren Gestänges (12) an einem Arbeitsfahrzeug höhenverstellbar angelenkt sind und bei der als lastabhängiger Sensor ein Drucksensor den hydraulischen Druck im Zylinder abgreift und ein davon abhängiges, erstes Signal bildet und mit einem die Lage des Gestänges relativ zum Arbeitsfahrzeug erfassenden Sensor zur Bildung eines davon abhängigen, zweiten Signals **dadurch gekennzeichnet, daß** Mittel (26) vorgesehen sind, die in mindestens zwei voneinander verschiedenen Meßstellungen des Gestänges (12) Meßwertsätze für mindestens zwei Signale abhängig vom Zylinder-Druck und der Gestänge-Lage ermitteln und daraus mindestens zwei unbekannte Größen für das Gewicht (G) und eine Größe ($r_{SP}$, $\alpha_{SP}$) für die Schwerpunktslage der Last (15, 11) bestimmen, wobei die Mittel (26) so ausgebildet sind, daß sie unter Ausnutzung der Beziehungen über das Gleichgewicht der Kräfte und Momente an einem der Lenker (17) des Gestänges (12) in jeder der mindestens zwei Meßstellungen diese unbekannten Größen aus den gemessenen Signalen und aus vorgegebenen geometrischen Größen des Gestänges mit angebautem Gerät (15) bestimmen.

2. Einrichtung zur Gewichtsbestimmung von Lasten nach Anspruch 1, **dadurch gekennzeichnet, daß** die Mittel (26) so ausgebildet sind, daß in mindestens drei voneinander veschiedenen Meßstellungen des Gestänges (12) die zwei Signale abhängig vom Zylinder-Druck und der Gestänge-Lage ermittelt und neben der unbekannten Größe für das Gewicht (G) beide Größen ($r_{SP}$, $\alpha_{SP}$) für die Schwerpunktslage der Last bestimmt werden.

3. Einrichtung zur Gewichtsbestimmung von Lasten nach Anspruch 1 oder 2, **dadurch gekennzeichnet, daß** ein die Längsneigung des Arbeitsfahrzeugs (13) erfassender Neigungssensor (29) angeordnet ist, der ein davon abhängiges drittes Signal ($\psi$) erzeugt, das zur Bestimmung der unbekannten Größen (G, $r_{SP}$, $\alpha_{SP}$) verwendet wird.

4. Einrichtung nach einem der Ansprüche 1 bis 3, **dadurch gekennzeichnet, daß** die Bestimmung der unbekannten Größen Gewicht (G) und Schwerpunktslage ($r_{SP}$, $\alpha_{SP}$) nach der Gleichung

$$M_F + G \cdot [\, r_{SP} \cdot \cos(\alpha_{SP} + \psi + \varphi_{TG}) \left(\frac{r_{SA}}{r_{SB}} - 1\right) + l_u \cdot (\cos(\varphi + \psi)) ] \doteq 0$$

erfolgt.

5. Einrichtung nach einem der Ansprüche 1 bis 4, **dadurch gekennzeichnet, daß** die Mittel (26) so ausgebildet sind, daß sie die richtungsabhängige Reibung des hydraulischen Zylinders (21) ermitteln und bei der Bestimmung des Gewichts (G) die Reibanteile eliminieren.

6. Einrichtung nach einem der Ansprüche 1 bis 5, **dadurch gekennzeichnet, daß** die Mittel (26) mit durch Substitution derart umgeformten Gleichungen arbeiten, in denen die unbekannten Größen nur linear verknüpft vorkommen.

7. Einrichtung nach Anspruch 6, **dadurch gekennzeichnet, daß** die Mittel (26) nach einem insbesondere rekursiven Parameterschätzverfahren arbeiten.

8. Einrichtung nach einem der Ansprüche 1 bis 7, **dadurch gekennzeichnet, daß** das Gestänge (12) als Drei-Punkt-Regelgestänge einer elektrohydraulischen Hubwerks-Regeleinrichtung (14) an einem Fahrzeug, insbesondere Traktor (13), ausgebildet ist.

9. Verfahren zur Gewichtsbestimmung von Lasten in welchem die Lasten mit Hilfe eines von einem hydraulischen Zylinder betätigbaren Gestänges an einem Arbeitsfahrzeug höhenverstellbar angelenkt sind, in welchem als lastabhängiger Sensor ein Drucksensor den hydraulischen Druck im Zylinder abgreift und ein davon abhängiges, erstes Signal bildet und in welchem ein die Lage des Gestänges relativ zum Arbeitsfahrzeug erfassender Sensor ein davon abhängiges, zweites Signal bildet, **dadurch gekennzeichnet, daß** in mindestens zwei voneinander verschiedenen Meßlagen des Gestänges (12) Meßwertsätze für mindestens zwei Signale abhängig vom Zylinder-Druck (27) und der Gestänge-Lage (28) ermittelt werden und daraus mindestens zwei unbekannte Größen für das Gewicht (G) und eine Größe ($r_{SP}$, $\alpha_{SP}$) für die Schwerpunktslage der Last (11) bestimmt werden, wobei unter Ausnutzung der Beziehungen über das Gleichgewicht der Kräfte und Momente an einem der Lenker (17) des Gestänges (12) in jeder Meßlage diese unbekannten Größen aus den gemessenen Signalen und aus vorgegebenen geometrischen Größen des Gestänges (12) und des angelenkten Geräts (15) ermittelt werden.

10. Verfahren zur Gewichtsbestimmung von Lasten nach Anspruch 9, **dadurch gekennzeichnet, daß** in mindestens drei voneinander veschiedenen Meßstellungen des Gestänges (12) die zwei Signale abhängig vom Zylinder-Druck und der Gestänge-Lage ermittelt und neben der unbekannten Größe für das Gewicht (G) beide Größen ($r_{SP}$, $\alpha_{SP}$) für die Schwerpunktslage der Last bestimmt werden.

11. Verfahren zur Gewichtsbestimmung von Lasten nach Anspruch 9 oder 10, **dadurch gekennzeichnet, daß** ein Neigungssensor (29) ein von der Längsneigung des Arbeitsfahrzeugs (13) abhängiges drittes Signal ($\psi$) erzeugt, das zur Bestimmung der unbekannten Größen (G, $r_{SP}$, $\alpha_{SP}$) verwendet wird.

12. Verfahren nach einem der Ansprüche 9 bis 11, **dadurch gekennzeichnet, daß** die im ersten Signal enthaltene richtungsabhängige Reibung des hydraulischen Zylinders (21) eliminiert wird.

13. Verfahren nach einem der Ansprüche 9 bis 12, **dadurch gekennzeichnet, daß** zur Ermittlung der unbekannten Größen aus den Gleichungen ein Substitutionsverfahren angewandt wird, bei dem die unbekannten Größen lediglich in linearer Verknüpfung vorkommen.

14. Verfahren nach einem der Ansprüche 9 bis 13, **dadurch gekennzeichnet, daß** die Meßwertsätze der mindestens zwei Signale in mindestens zwei voneinander unterschiedlichen Meßstellungen erfaßt und die unbekannten Größen durch direkte algebraische Berechnung ermittelt werden.

15. Verfahren nach einem der Ansprüche 9 bis 14, **dadurch gekennzeichnet, daß** die Meßwertsätze der mindestens zwei Signale in mehr als zwei Meßstellungen gemessen werden und die unbekannten Größen nach einem Parameterschätzverfahren ermittelt werden.

16. Verfahren nach Anspruch 15, **dadurch gekennzeichnet, daß** ein Verfahren mit direkter Parameterschätzung angewandt wird.

17. Verfahren nach Anspruch 15, **dadurch gekennzeichnet, daß** ein Verfahren mit rekursiver Parameterschätzung angewandt wird.

18. Verfahren nach Anspruch 17, **dadurch gekennzeichnet, daß** eine gewichtete rekursive Parameterschätzung durchgeführt wird.

19. Verfahren nach einem der Ansprüche 9 bis 18, **dadurch gekennzeichnet, daß** es bei einem Traktor (13) mit elektrohydraulischer Hubwerks-Regeleinrichtung (14) angewandt wird, wobei die Längsneigung des Traktors (13) vom Neigungssensor (29) gemessen wird.

## Claims

1. Device for determining the weight of loads in which the loads are attached to a working vehicle with the aid of a linkage (12) that can be operated by a hydraulic cylinder such that the height of the load can be adjusted, and in which, as a load-dependent sensor, a pressure sensor picks up the hydraulic pressure in the cylinder and forms a first signal depending on the said pressure, and having a sensor that registers the position of the linkage relative to the working vehicle in order to form a second signal depending on the said position, **characterized in that** means (26) are provided which, in at least two mutually different measuring positions of the linkage (12), determine measured value sets for at least two signals depending on the cylinder pressure and the linkage position and, from these, determine at least two unknown variables for the weight (G) and a variable ($r_{SP}$, $\alpha_{SP}$) for the position of the centre of gravity of the load (15, 11), the means (26) being formed in such a way that, by using the relationships about the equilibrium of the forces and moments on one of the links (17) of the linkage (12) in each of the at least two measuring positions, they determine these unknown variables from the measured signals and from predefined geometric variables of the linkage with fitted implement (15).

2. Device for determining the weight of loads according to Claim 1, **characterized in that** the means (26) are formed in such a way that, in at least three mutually different measuring positions of the linkage (12), the two signals depending on the cylinder pressure and the linkage position are determined and, in addition to the unknown variable for the weight (G), the two variables ($r_{SP}$, $\alpha_{SP}$) for the position of the centre of gravity of the load are determined.

3. Device for determining the weight of loads according to Claim 1 or 2, **characterized in that** an inclination sensor (29) registering the longitudinal inclination of the working vehicle (13) is arranged and generates a third signal ($\psi$) which depends on the said inclination and which is used to determine the unknown variables (G, $r_{SP}$, $\alpha_{SP}$).

4. Device according to one of Claims 1 to 3, **characterized in that** the determination of the unknown variables comprising the weight (G) and the position of the centre of gravity ($r_{SP}$, $\alpha_{SP}$) is carried out in accordance with the equation

$$M_F + G\cdot[r_{SP}\cdot\cos(\alpha_{SP} + \psi + \varphi_{TG})\,(\frac{r_{SA}}{r_{SB}} - 1) + l_u\cdot(\cos(\varphi + \psi))] = 0.$$

5. Device according to one of Claims 1 to 4, **characterized in that** the means (26) are formed in such a way that they determine the direction-dependent friction of the hydraulic cylinder (21) and eliminate the frictional components when determining the weight (G).

6. Device according to one of Claims 1 to 5, **characterized in that** the means (26) operate with equations which are transformed by means of substitution in such a way that the unknown variables occur only linearly linked.

7. Device according to Claim 6, **characterized in that** the means (26) operate in accordance with an in particular recursive parameter estimation method.

8. Device according to one of Claims 1 to 7, **characterized in that** the linkage (12) is formed as a three-point control linkage of an electrohydraulic lifting mechanism control device (14) on a vehicle, in particular a tractor (13).

9. Method for determining the weight of loads in which the loads are attached to a working vehicle with the aid of a linkage (12) that can be operated by a hydraulic cylinder such that the height of the load can be adjusted, in which, as a load-dependent sensor, a pressure sensor picks up the hydraulic pressure in the cylinder and forms a first signal depending on the said pressure, and in which a sensor that registers the position of the linkage relative to the working vehicle forms a second signal depending on the said position, **characterized in that**, in at least two mutually different measuring positions of the linkage (12), measured value sets for at least two signals depending on the cylinder pressure (27) and the linkage position (28) are determined and, from these, at least two unknown variables for the weight (G) and a variable ($r_{SP}$, $\alpha_{SP}$) for the position of the centre of gravity of the load (11) are determined and, by using the relationships about the equilibrium of the forces and moments on one of the links (17) of the linkage (12) in each of the measuring positions, these unknown variables being determined from the measured signals and from predefined geometric variables of the linkage (12) and of the fitted implement (15).

10. Method of determining the weight of loads according to Claim 9, **characterized in that**, in at least three mutually different measuring positions of the linkage (12), the two signals depending on the cylinder pressure and the linkage position are determined and, in addition to the unknown variable for the weight (G), the two variables ($r_{SP}$, $\alpha_{SP}$) for the position of the centre of gravity of the load are determined.

**11.** Method of determining the weight of loads according to Claim 9 or 10, **characterized in that** an inclination sensor (29) generates a third signal ($\psi$) which depends on the longitudinal inclination of the working vehicle (13) and which is used to determine the unknown variables (G, $r_{SP}$, $\alpha_{SP}$).

**12.** Method according to one of Claims 9 to 11, **characterized in that** the direction-dependent friction of the hydraulic cylinder (21), contained in the first signal, is eliminated.

**13.** Method according to one of Claims 9 to 12, **characterized in that**, in order to determine the unknown variables from the equations, a substitution method is applied in which the unknown variables occur only in a linear combination.

**14.** Method according to one of Claims 9 to 13, **characterized in that** the measured value sets of the at least two signals are registered in at least two mutually different measuring positions and the unknown variables are determined by means of direct algebraic calculation.

**15.** Method according to one of Claims 9 to 14, **characterized in that** the measuring value sets of the at least two signals are measured in more than two measuring positions and the unknown variables are determined in accordance with a parameter estimation method.

**16.** Method according to Claim 15, **characterized in that** a method with direct parameter estimation is applied.

**17.** Method according to Claim 15, **characterized in that** a method with recursive parameter estimation is applied.

**18.** Method according to Claim 17, **characterized in that** a weighted recursive parameter estimation is carried out.

**19.** Method according to one of Claims 9 to 18, **characterized in that** it is applied in the case of a tractor (13) with an electrohydraulic lifting mechanism control device (14), the longitudinal inclination of the tractor (13) being measured by the inclination sensor (29).

## Revendications

**1.** Dispositif pour déterminer le poids de charges, dans lequel les charges sont articulées par rapport à un véhicule utilitaire à l'aide d'une barre (12) pouvant être actionnée par un vérin hydraulique, de façon à pouvoir se déplacer en hauteur, et en tant que capteur dépendant de la charge, un capteur de pression saisit la pression hydraulique dans le vérin et forme un premier signal qui en est dépendant, et avec un capteur qui acquiert la position de la barre par rapport au véhicule utilitaire pour former un deuxième signal qui en dépend,
**caractérisé par**
des moyens (26) qui, au moins dans deux positions de mesure différentes l'une de l'autre de la barre (12), déterminent des jeux de valeurs de mesures pour au moins deux signaux dépendant de la pression de vérin et de la position de barre et, à partir de cela, définissent au moins deux grandeurs inconnues pour le poids (G) et une grandeur ($r_{SP}$, $\alpha_{SP}$) pour la position du centre de gravité de la charge (15, 11), les moyens (26) étant configurés de telle manière qu'en utilisant les relations de l'équilibre des forces et des couples sur l'un des guides (17) de la barre (12) dans chacune des au moins deux positions de mesure, ils définissent les grandeurs inconnues à partir des signaux mesurés et de grandeurs géométriques prédéfinies de la barre avec l'appareil (15) monté.

**2.** Dispositif pour déterminer le poids de charges selon la revendication 1,
**caractérisé en ce que**
les moyens (26) sont configurés de telle manière que dans au moins trois positions de mesure différentes l'une de l'autre de la barre (12) les deux signaux dépendant de la pression de vérin et de la position de barre sont déterminés et qu'outre la grandeur inconnue pour le poids (G), les deux grandeurs ($r_{SP}$, $\alpha_{SP}$) pour la position du centre de gravité de la charge sont définies.

**3.** Dispositif pour déterminer le poids de charges selon la revendication 1 ou 2,

**caractérisé en ce qu'**
un capteur d'inclinaison (29) acquérant l'inclinaison longitudinale du véhicule utilitaire (13) crée un troisième signal ($\psi$) qui en est dépendant, utilisé pour la définition des grandeurs inconnues (G, $r_{SP}$, $\alpha_{SP}$).

**4.** Dispositif selon l'une quelconque des revendications 1 à 3,
**caractérisé en ce que**
la définition des grandeurs inconnues poids (G) et position du centre de gravité ($r_{SP}$, $\alpha_{SP}$) s'effectue selon l'équation

$$M_F + G \cdot [ r_{SP} \cdot \cos(\alpha_{SP} + \psi + \varphi_{TG}) \left(\frac{r_{SA}}{r_{SB}} - 1\right) + l_u \cdot (\cos(\varphi + \psi)] = 0$$

**5.** Dispositif selon l'une quelconque des revendications 1 à 4,
**caractérisé en ce que**
les moyens (26) sont configurés de telle manière qu'ils déterminent le frottement dépendant de la direction du vérin hydraulique (21) et éliminent la composante de frottement lors de la définition du poids (G).

**6.** Dispositif selon l'une quelconque des revendications 1 à 5,
**caractérisé en ce que**
les moyens (26) travaillent avec des équations transformées de telle manière par substitution, que dans celles-ci les grandeurs inconnues ne se présentent qu'en combinaison linéaire.

**7.** Dispositif selon la revendication 6, ^
**caractérisé en ce que**
les moyens (26) travaillent selon un procédé d'estimation de paramètres en particulier récursif.

**8.** Dispositif selon l'une quelconque des revendications 1 à 7,
**caractérisé en ce que**
la barre (12) est configurée en tant que barre de réglage trois points d'un dispositif électro-hydraulique de réglage 14 de système de levage d'un véhicule, en particulier d'un tracteur (13).

**9.** Procédé pour déterminer le poids de charges, dans lequel les charges sont articulées par rapport à un véhicule utilitaire à l'aide d'une barre pouvant être actionnée par un vérin hydraulique, de façon à pouvoir se déplacer en hauteur, et en tant que capteur dépendant de la charge, un capteur de pression saisit la pression hydraulique dans le vérin et forme un premier signal qui en dépend et, un capteur qui saisit la position de la barre par rapport au véhicule utilitaire forme un deuxième signal qui en dépend,
**caractérisé en ce qu'**
au moins dans deux positions de mesure différentes l'une de l'autre de la barre (12), des jeux de valeurs de mesures pour au moins deux signaux dépendant de la pression de vérin (27) et de la position de barre (28) sont déterminés et, à partir de cela, au moins deux grandeurs inconnues pour le poids (G) et une grandeur ($r_{SP}$, $\alpha_{SP}$) pour la position du centre de gravité de la charge (11) sont définies, et, en utilisant les relations de l'équilibre des forces et des couples en l'un des guides (17) de la barre (12) dans chaque position de mesure, ces grandeurs inconnues sont déterminées à partir des signaux mesurés et de grandeurs géométriques prédéfinies de la barre (12) et de l'appareil (15) articulé.

**10.** Procédé pour déterminer le poids de charges selon la revendication 9,
**caractérisé en ce que**
en au moins trois positions de mesure différentes les unes des autres de la barre (12), les deux signaux dépendant de la pression de vérin et de la position de barre sont déterminés, et outre la grandeur inconnue pour le poids (G), les deux grandeurs ($r_{SP}$, $\alpha_{SP}$) pour la position du centre de gravité de la charge sont définies.

**11.** Procédé pour déterminer le poids de charges selon la revendication 9 ou 10,
**caractérisé en ce qu'**
un capteur d'inclinaison (29) crée un troisième signal ($\psi$) dépendant de l'inclinaison longitudinale du véhicule utilitaire (13), utilisé pour la définition des grandeurs inconnues (G, $r_{SP}$, $\alpha_{SP}$).

**12.** Procédé selon l'une quelconque des revendications 9 à 11,
**caractérisé en ce que**
le frottement du vérin hydraulique (21) dépendant de la direction contenu dans le premier signal est éliminé.

**13.** Procédé selon l'une quelconque des revendications 9 à 12,
**caractérisé en ce que** pour
la détermination des grandeurs inconnues à partir des équations, un procédé de substitution est appliqué, dans lequel les grandeurs inconnues se présentent uniquement en combinaison linéaire.

**14.** Procédé selon l'une quelconque des revendications 9 à 13,
**caractérisé en ce que**
les jeux de valeurs de mesures des au moins deux signaux sont acquis dans au moins deux positions de mesure différentes l'une de l'autre et que les grandeurs inconnues sont déterminées par calcul algébrique direct.

**15.** Procédé selon l'une quelconque des revendications 9 à 14,
**caractérisé en ce que**
les jeux de valeurs de mesures des au moins deux signaux sont mesurés en plus de deux positions de mesure et les grandeurs inconnues sont déterminées selon un procédé d'estimation de paramètres.

**16.** Procédé selon la revendication 15,
**caractérisé en ce qu'**
un procédé avec estimation directe de paramètres est appliqué.

**17.** Procédé selon la revendication 15,
**caractérisé en ce qu'**
un procédé avec estimation récursive de paramètres est appliqué.

**18.** Procédé selon la revendication 17,
**caractérisé en ce qu'**
un procédé avec estimation récursive pondérée de paramètres est exécuté.

**19.** Procédé selon l'une quelconque des revendications 9 à 18,
**caractérisé en ce qu'**
il est appliqué dans un tracteur (13) équipé d'un dispositif de réglage (14) de système de levage électro-hydraulique, l'inclinaison longitudinale du tracteur (13) étant mesurée par le capteur d'inclinaison (29).

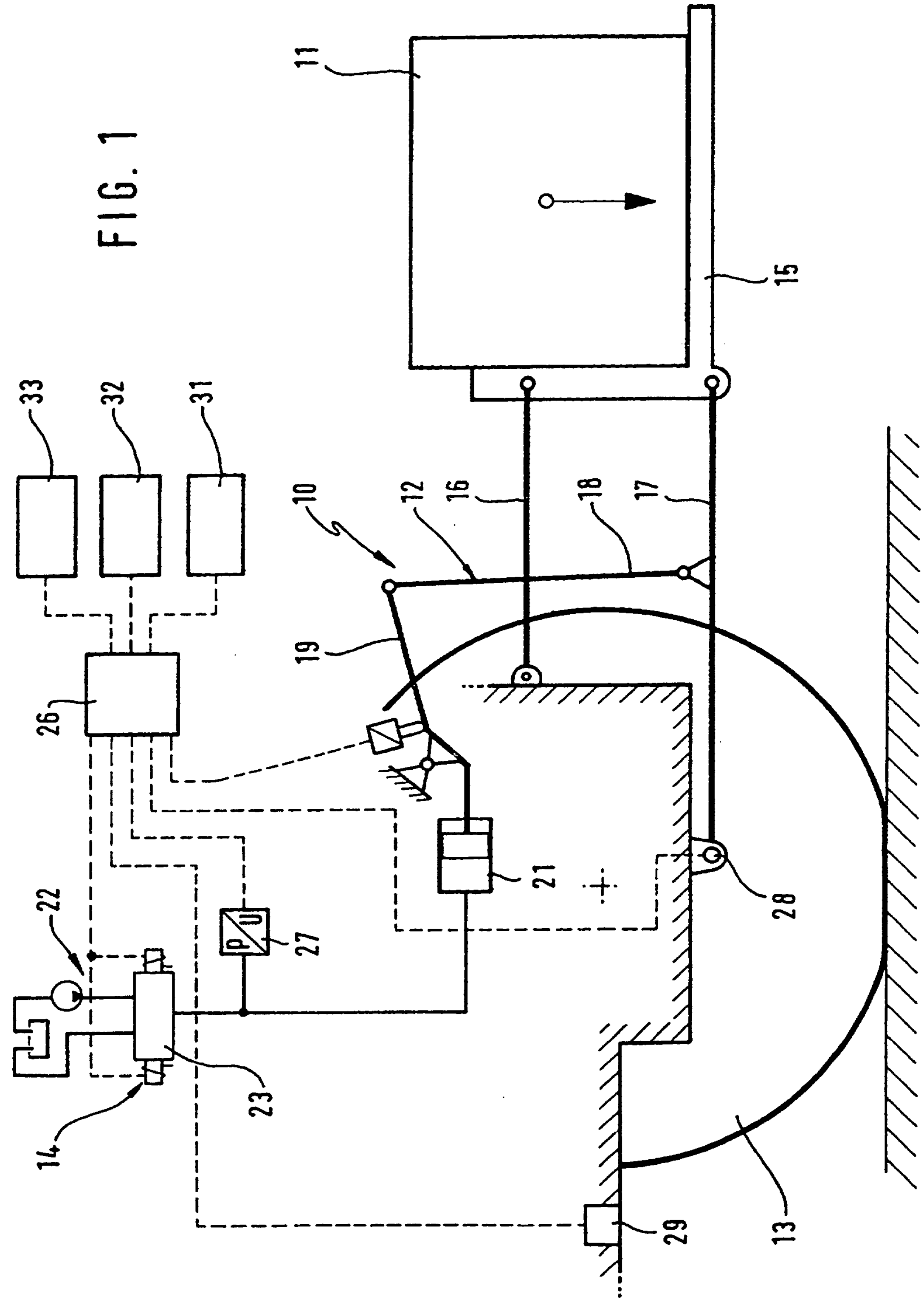


FIG. 1

FIG. 2

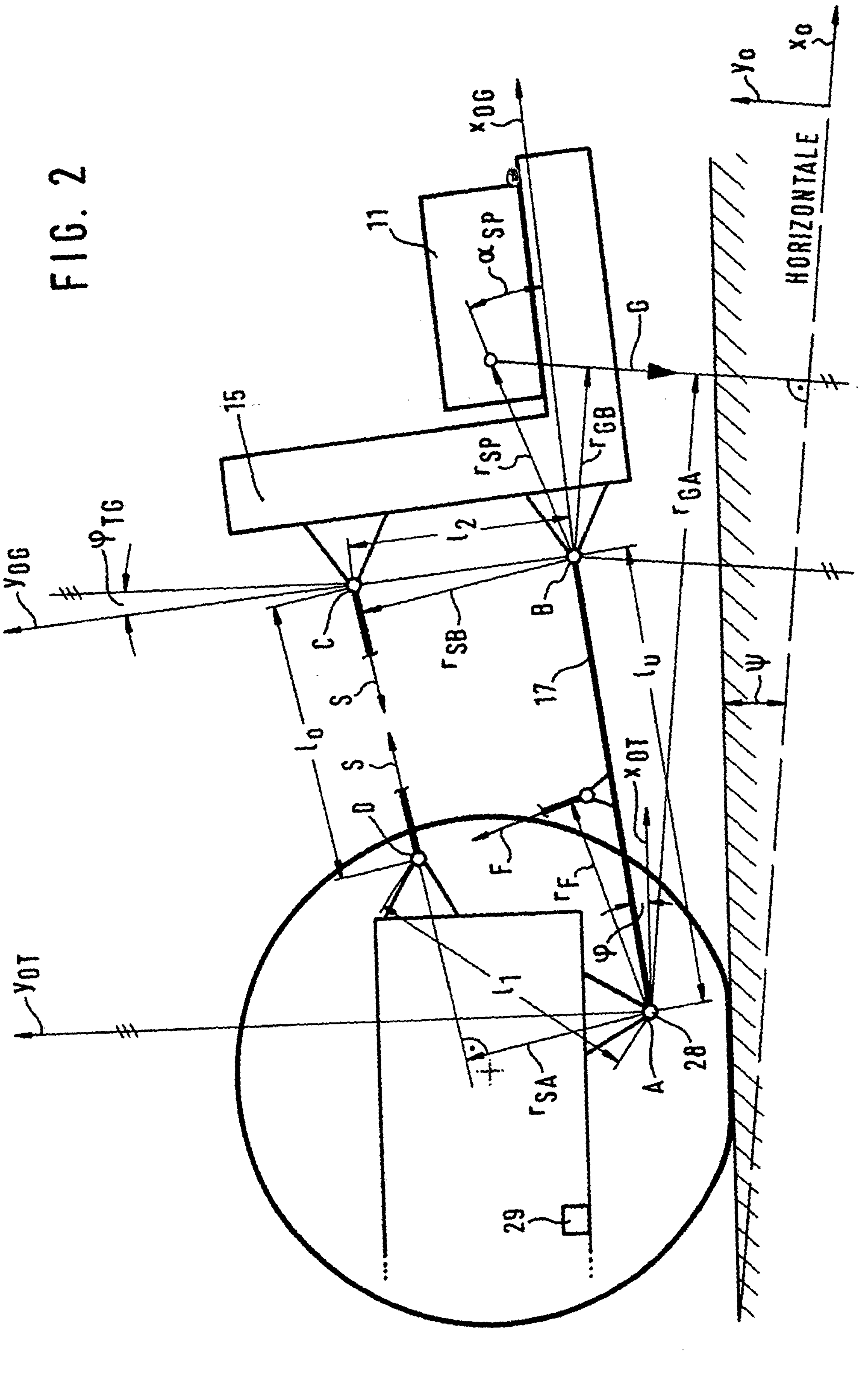
11
15
17
28
29
A
B
C
D
F
G
S
HORIZONTALE
$x_{OG}$
$y_{OG}$
$x_{OT}$
$y_{OT}$
$x_0$
$y_0$
$\varphi_{TG}$
$\alpha_{SP}$
$r_{SP}$
$r_{GB}$
$r_{GA}$
$r_{SB}$
$r_{SA}$
$r_F$
$l_1$
$l_2$
$l_o$
$l_u$
$\varphi$
$\psi$

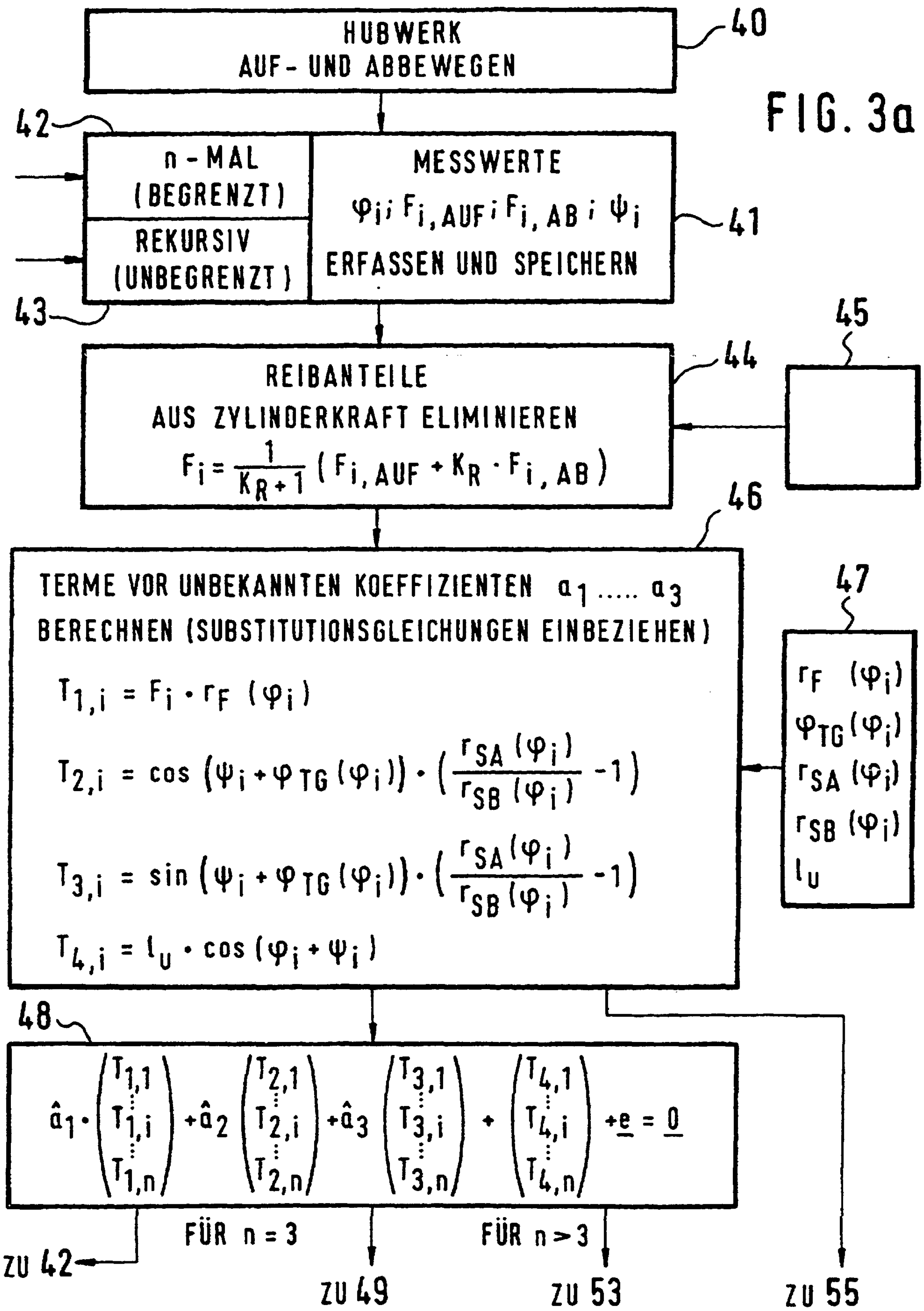
40
HUBWERK
AUF- UND ABBEWEGEN
FIG. 3a
42
n-MAL
(BEGRENZT)
REKURSIV
(UNBEGRENZT)
43
MESSWERTE
$\varphi_i$; $F_{i,AUF}$; $F_{i,AB}$; $\psi_i$
ERFASSEN UND SPEICHERN
41
45
44
REIBANTEILE
AUS ZYLINDERKRAFT ELIMINIEREN
$F_i = \frac{1}{K_R + 1}(F_{i,AUF} + K_R \cdot F_{i,AB})$
46
TERME VOR UNBEKANNTEN KOEFFIZIENTEN $a_1 \ldots a_3$
BERECHNEN (SUBSTITUTIONSGLEICHUNGEN EINBEZIEHEN)
$T_{1,i} = F_i \cdot r_F(\varphi_i)$
$T_{2,i} = \cos(\psi_i + \varphi_{TG}(\varphi_i)) \cdot \left(\frac{r_{SA}(\varphi_i)}{r_{SB}(\varphi_i)} - 1\right)$
$T_{3,i} = \sin(\psi_i + \varphi_{TG}(\varphi_i)) \cdot \left(\frac{r_{SA}(\varphi_i)}{r_{SB}(\varphi_i)} - 1\right)$
$T_{4,i} = l_U \cdot \cos(\varphi_i + \psi_i)$
47
$r_F(\varphi_i)$
$\varphi_{TG}(\varphi_i)$
$r_{SA}(\varphi_i)$
$r_{SB}(\varphi_i)$
$l_U$
48
$\hat{a}_1 \cdot \begin{pmatrix} T_{1,1} \\ T_{1,i} \\ T_{1,n} \end{pmatrix} + \hat{a}_2 \begin{pmatrix} T_{2,1} \\ T_{2,i} \\ T_{2,n} \end{pmatrix} + \hat{a}_3 \begin{pmatrix} T_{3,1} \\ T_{3,i} \\ T_{3,n} \end{pmatrix} + \begin{pmatrix} T_{4,1} \\ T_{4,i} \\ T_{4,n} \end{pmatrix} + \underline{e} = \underline{0}$
FÜR n = 3
FÜR n > 3
ZU 42
ZU 49
ZU 53
ZU 55

FIG. 3b

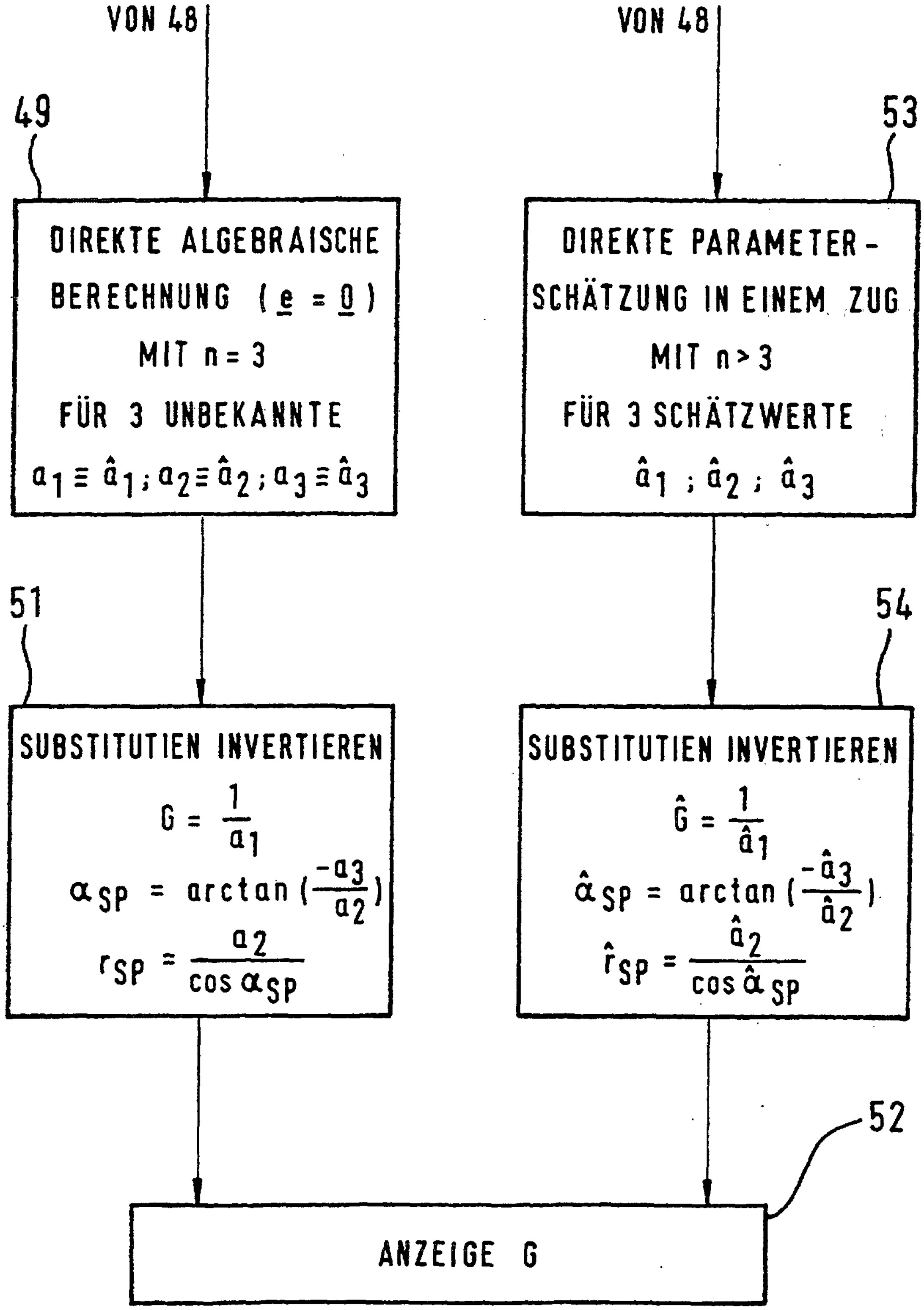
VON 48
VON 48
49
53
DIREKTE ALGEBRAISCHE BERECHNUNG ( e = 0 ) MIT n = 3 FÜR 3 UNBEKANNTE
$a_1 \equiv \hat{a}_1 ; a_2 \equiv \hat{a}_2 ; a_3 \equiv \hat{a}_3$
DIREKTE PARAMETER-SCHÄTZUNG IN EINEM ZUG MIT n > 3 FÜR 3 SCHÄTZWERTE
$\hat{a}_1 ; \hat{a}_2 ; \hat{a}_3$
51
54
SUBSTITUTIEN INVERTIEREN
$G = \frac{1}{a_1}$
$\alpha_{SP} = \arctan\left(\frac{-a_3}{a_2}\right)$
$r_{SP} = \frac{a_2}{\cos \alpha_{SP}}$
SUBSTITUTIEN INVERTIEREN
$\hat{G} = \frac{1}{\hat{a}_1}$
$\hat{\alpha}_{SP} = \arctan\left(\frac{-\hat{a}_3}{\hat{a}_2}\right)$
$\hat{r}_{SP} = \frac{\hat{a}_2}{\cos \hat{\alpha}_{SP}}$
52
ANZEIGE G

FIG. 3c

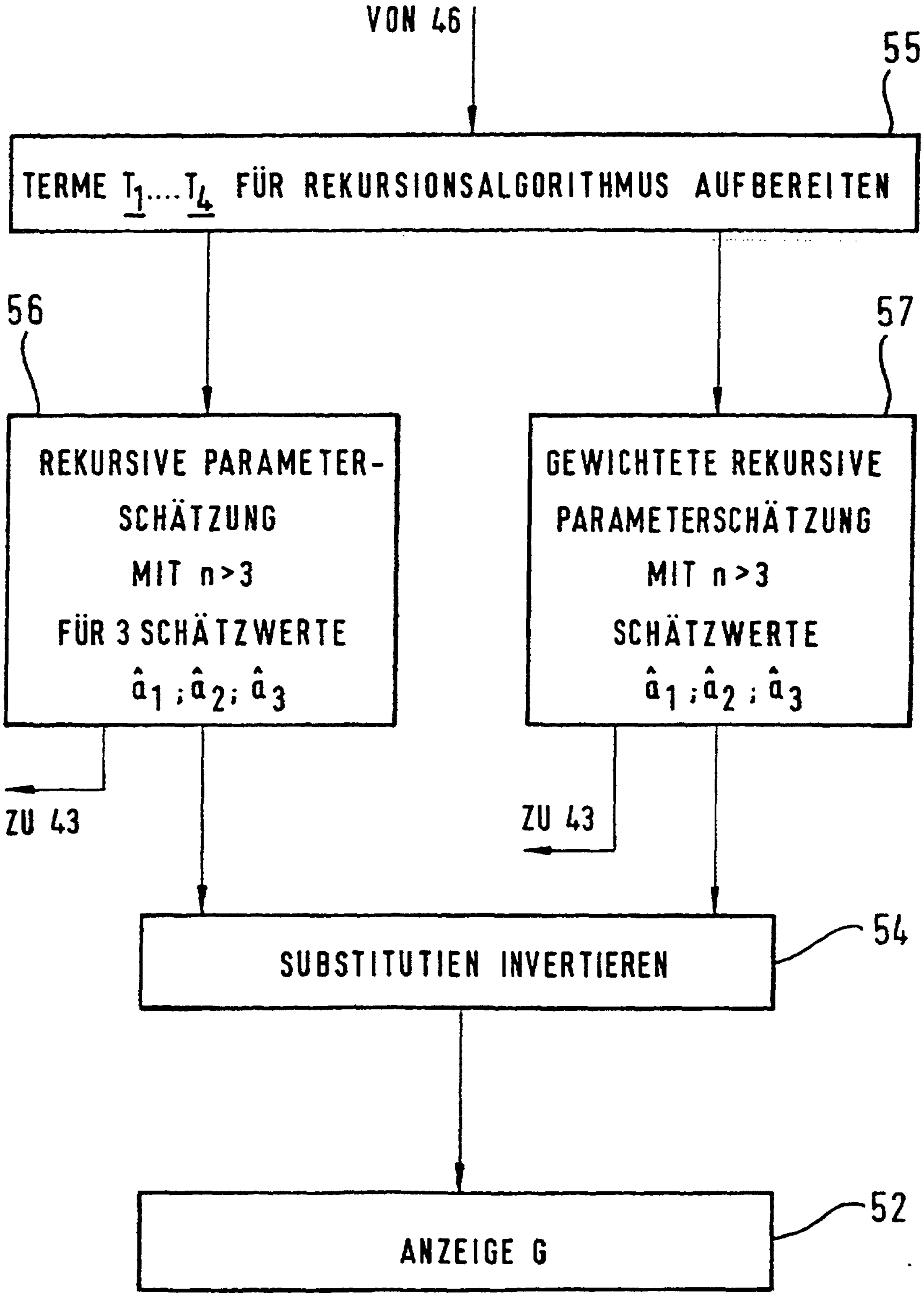
VON 46
55
TERME $T_1 \ldots T_4$ FÜR REKURSIONSALGORITHMUS AUFBEREITEN
56
57
REKURSIVE PARAMETER-SCHÄTZUNG MIT n>3 FÜR 3 SCHÄTZWERTE $\hat{a}_1$; $\hat{a}_2$; $\hat{a}_3$
GEWICHTETE REKURSIVE PARAMETERSCHÄTZUNG MIT n>3 SCHÄTZWERTE $\hat{a}_1$; $\hat{a}_2$; $\hat{a}_3$
ZU 43
ZU 43
SUBSTITUTIEN INVERTIEREN
54
ANZEIGE G
52

FIG. 4

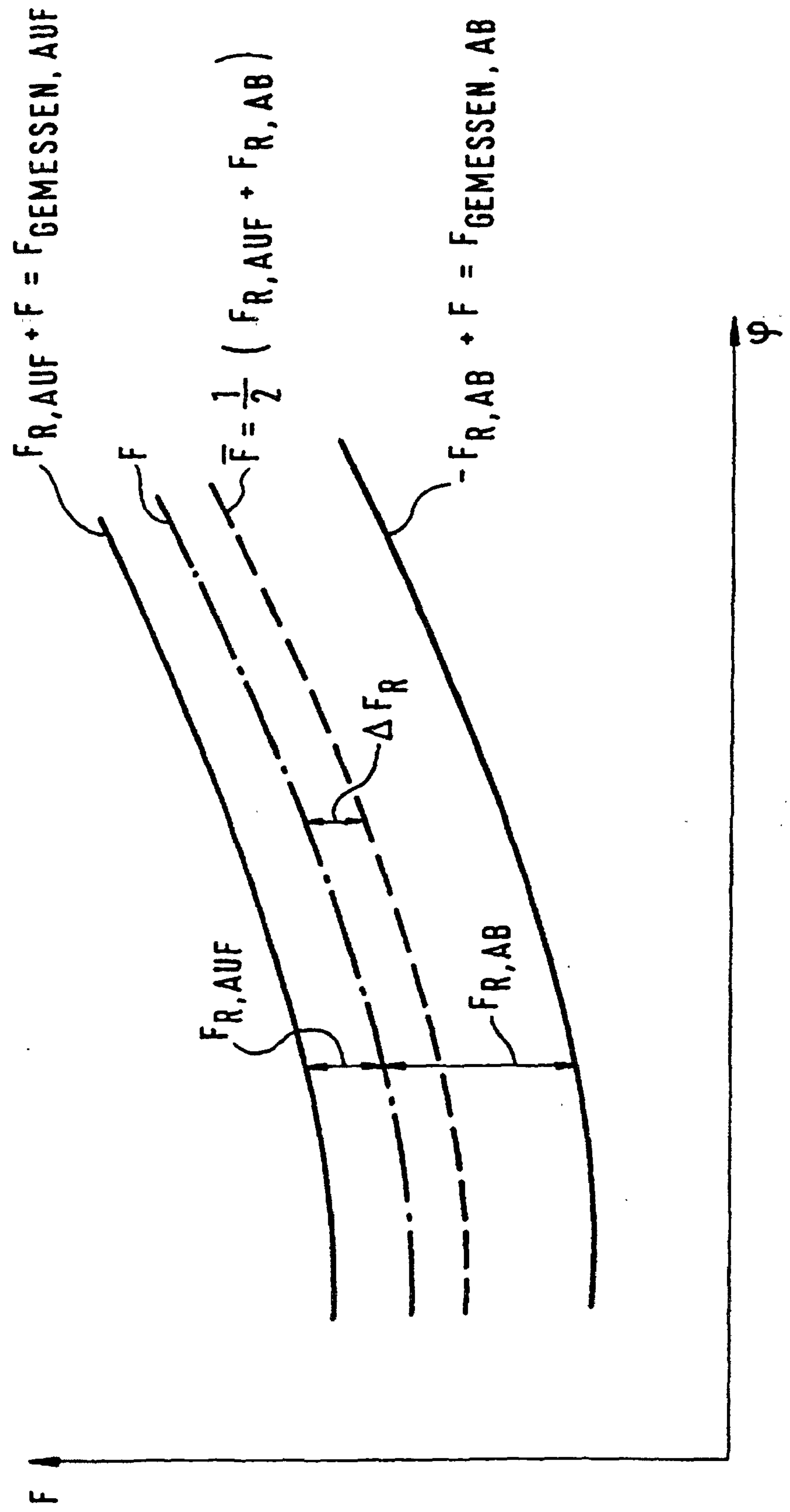
$F_{R,AUF} + F = F_{GEMESSEN,AUF}$
F
$\bar{F} = \frac{1}{2}(F_{R,AUF} + F_{R,AB})$
$-F_{R,AB} + F = F_{GEMESSEN,AB}$
φ
$\Delta F_R$
$F_{R,AUF}$
$F_{R,AB}$
F

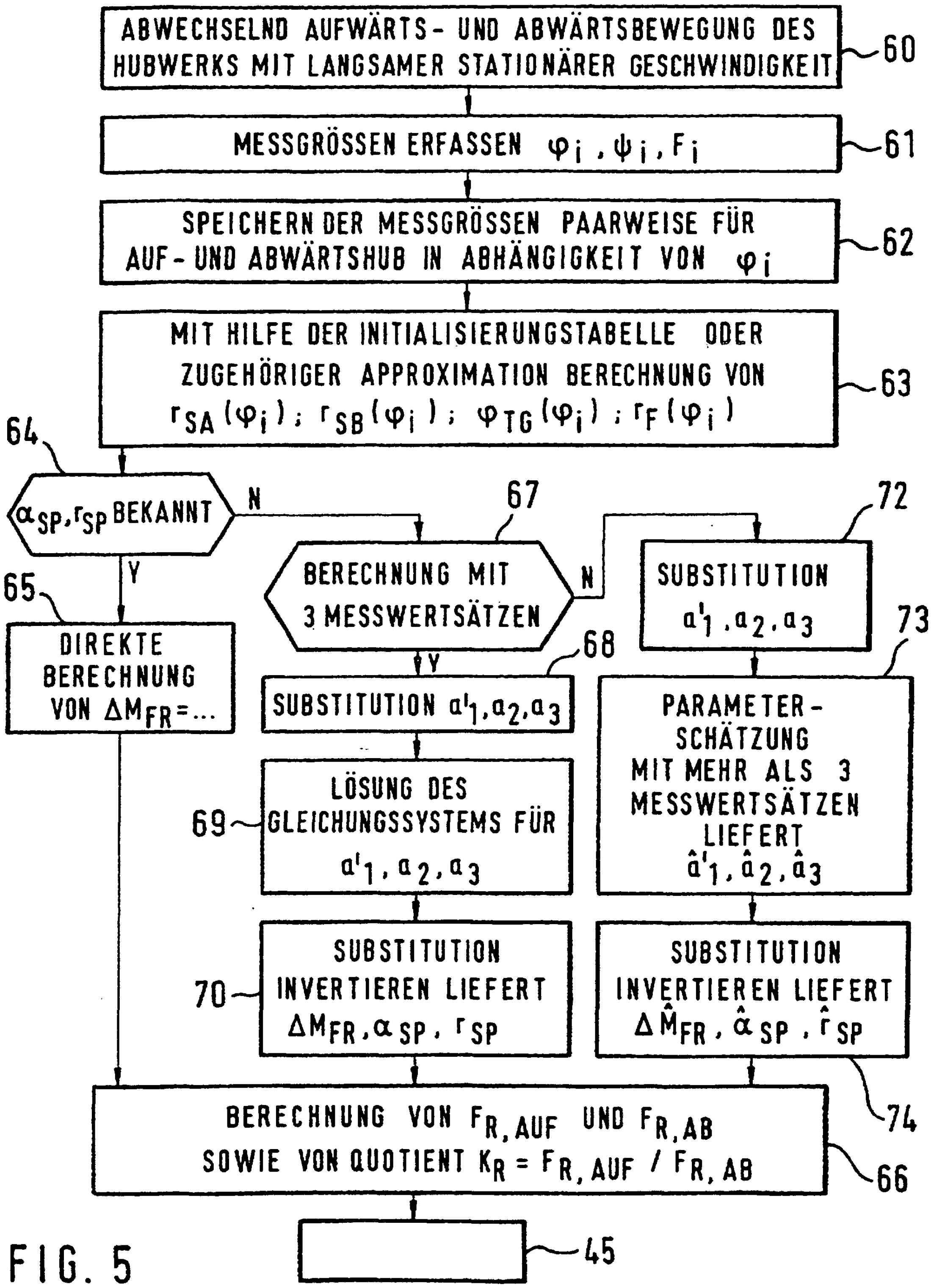
ABWECHSELND AUFWÄRTS- UND ABWÄRTSBEWEGUNG DES HUBWERKS MIT LANGSAMER STATIONÄRER GESCHWINDIGKEIT
60
MESSGRÖSSEN ERFASSEN $\varphi_i$, $\psi_i$, $F_i$
61
SPEICHERN DER MESSGRÖSSEN PAARWEISE FÜR AUF- UND ABWÄRTSHUB IN ABHÄNGIGKEIT VON $\varphi_i$
62
MIT HILFE DER INITIALISIERUNGSTABELLE ODER ZUGEHÖRIGER APPROXIMATION BERECHNUNG VON $r_{SA}(\varphi_i)$; $r_{SB}(\varphi_i)$; $\varphi_{TG}(\varphi_i)$; $r_F(\varphi_i)$
63
64
$\alpha_{SP}$, $r_{SP}$ BEKANNT
N
Y
65
DIREKTE BERECHNUNG VON $\Delta M_{FR}$=...
67
BERECHNUNG MIT 3 MESSWERTSÄTZEN
N
Y
72
SUBSTITUTION $a'_1$, $a_2$, $a_3$
73
68
SUBSTITUTION $a'_1$, $a_2$, $a_3$
69
LÖSUNG DES GLEICHUNGSSYSTEMS FÜR $a'_1$, $a_2$, $a_3$
PARAMETER-SCHÄTZUNG MIT MEHR ALS 3 MESSWERTSÄTZEN LIEFERT $\hat{a}'_1$, $\hat{a}_2$, $\hat{a}_3$
70
SUBSTITUTION INVERTIEREN LIEFERT $\Delta M_{FR}$, $\alpha_{SP}$, $r_{SP}$
SUBSTITUTION INVERTIEREN LIEFERT $\Delta \hat{M}_{FR}$, $\hat{\alpha}_{SP}$, $\hat{r}_{SP}$
74
BERECHNUNG VON $F_{R,AUF}$ UND $F_{R,AB}$ SOWIE VON QUOTIENT $K_R = F_{R,AUF} / F_{R,AB}$
66
45

FIG. 5